# EUROPEAN PATENT SPECIFICATION

(11) **EP 3 752 397 B1**
(45) Date of publication and mention of the grant of the patent: **15.12.2021**
(21) Application number: 19708361.1
(22) Date of filing: 08.02.2019
(51) Int. Cl.: B60T 7/04, B60T 7/06, B60T 8/26, B60T 8/32

(54) **COMBINED FRONT/REAR BRAKING SYSTEM FOR A VEHICLE AND VEHICLE EQUIPPED WITH SUCH A BRAKING SYSTEM**
KOMBINIERTES VORDER-/HINTERBREMSSYSTEM FÜR KRAFTFAHRZEUG UND KRAFTFAHRZEUG MIT EINEM DERARTIGEN SYSTEM
SYSTEME DE FREINAGE COMBINE ANTERIEUR-POSTERIEUR POUR VEHICULE ET VEHICULE AVEC UN TEL SYSTEME DE FREINAGE

(30) Priority: 16.02.2018 IT 201800002765
(43) Date of publication of application: 23.12.2020
(73) Proprietor: PIAGGIO & C. S.p.A., 56025 Pontedera (Pisa) (IT)
(72) Inventor: SAVINO, Emanuele, 56025 Pontedera (PI) (IT); ASPETTATI, Paolo, 56025 Pontedera (PI) (IT); PETRINI, Francesco, 56025 Pontedera (PI) (IT)
(74) Representative: Mannucci, Michele
(86) International application number: PCT/IB2019/051030
(87) International publication number: WO 2019/159048

(56) References cited:
- EP-A1- 3 075 617
- EP-A2- 2 682 334
- EP-A2- 2 684 788
- WO-A1-2015/181798
- WO-A1-2017/093891
- WO-A1-2017/168231
- JP-A- 2015 160 548

## Description

### TECHNICAL FIELD

The object of the present invention is a combined front-rear braking system for a motor vehicle, in particular a motor vehicle and a related system providing for a hydraulically controlled front brake, in particular, although without limitation, a disc brake, and a mechanically controlled rear brake, in particular, although without limitation, a drum brake.

### BACKGROUND ART AND DEFINITIONS

"Hydraulic actuation" refers to an actuation providing for transferring an actuation pressure through an incompressible fluid in a transmission duct, with a hydraulic piston determining an actuation pressure in a cylinder, this pressure being transmitted up to an actuator controlling a mechanical braking member, for example the calipers of a disc brake. This configuration is usually used for the front brake.

"Mechanical actuation" means an actuation providing for an actuation cable, which is pulled by a control member, typically a lever on the handlebar or a pedal on the floorboard of the vehicle, so as to transmit, through this traction, an actuation force to a mechanical braking member, acting against an elastic return device. This configuration is usually used for the rear brake.

"Combined braking system" means a system providing for the separate actuation of each brake, but wherein the actuation of the rear brake, in particular by means of a deeply thrusting of the control member, also causes the actuation of the front brake, delayed with respect to that of the rear brake and with a lower braking force, so as to avoid that the vehicle noises up or that the front wheel stops, leading to great discomfort and severe hazard for the users of the motor vehicle.

However, if no sufficient force would be transferred to the wheel, the only braking action exerted on the rear wheel could be insufficient for stopping the vehicle within the expected time/space.

Therefore, the combined system shall balance the braking loads between the front wheel and the rear wheel, so that, also in case of sudden braking, the vehicle remains stable to a certain extent, ensuring at the same time to brake with a stopping distance as short as possible.

In many known combined systems, the braking force is distributed by means of a hydraulic member reacting to the actuation of the rear brake, i.e. to the displacement of the control cable of the rear brake that is coupled to linkages acting on a distributing piston inside the hydraulic member, which allows transmitting the increased pressure to a hydraulic circuit controlling the rear brake. One of these systems is known from example from the EP 3 075 617 A1.

However, the design of the hydraulic member is complex, and changes in the positions of the control cables and the connections with the linkage, due to mechanical clearances, failures etc., can make the hydraulic member imprecise or even unusable.

The technical problem underlying the invention is to provide a combined braking system allowing to overcome the drawback mentioned above with reference to the current art.

### SUMMARY

The idea for the solution is to exploit the sheath where the control cable is inserted, which reacts when a force is applied to the cable. In practice, by means of a rear brake control member (for instance a pedal) a deformation of the sheath, in which ha cable is housed, is caused. The cable is anchored at one end to a rear brake actuator and at the other end to front brake actuation means. The sheath deformation, which has at least one curved portion and one end whereof is abutting against a fixed point and the other end whereof is associated with the rear brake control member, causes a traction of the cable, which in turn causes reaction forces at the two ends of the cable, in order to activate both the rear brake and the front brake. In embodiments described herein, the system can be configured such that actuation of the front brake by means of the cable is delayed compared to the actuation of the rear brake.

In practical terms, according to one aspect, a combined front-rear braking system of a motor vehicle is provided, including a hydraulically controlled front brake and a mechanically controlled rear brake. The braking system comprises a first control member for controlling the front brake and a second control member for controlling the rear brake. Both the first control member and the second control member are movable between a rest position and an operative position. The system further comprises a hydraulic actuator of the front brake, hydraulically controlled through said first control member. There is also provided a mechanical actuator of the rear brake controlled through the second control member. The system further comprises a transmission cable connected at a first end for actuating the front brake and at a second end to a mechanical actuator for actuating the rear brake. The transmission cable is housed in a sheath, such that the transmission cable and the sheath have at least a curved portion, at which said transmission cable and said sheath rub together, such that a force is transmitted from one to the other. The second control member is connected to the sheath such as to apply a force which is transmitted to the ends of the transmission cable, causing the combined control of the front and rear brakes.

The main advantage of the integrated braking system according to the invention is to allow an effective distribution of the braking forces without using complex distribution hydraulic members.

Further advantageous features and embodiments of the system are described here on reference being made to the claims, and in the annexed claims, which form an integral part of the present description.

Also disclosed herein is a motor vehicle, in particular a motor scooter or other two- or three-wheeled vehicle comprising a braking system as mentioned above.

### BRIEF DESCRIPION OF THE DRAWINGS

The present invention will be described below with reference to some preferred embodiments, given just by way of non-limiting examples, with reference to the accompanying drawing, where:
figure 1 is a side view of a motor vehicle using an integrated braking system according to the invention;
figure 2 is a partial perspective view of the motor vehicle of figure 1, i.e. of the body thereof, including an integrated braking system according to the invention;
figure 3 is a schematic view of the control members of the front brake and of the rear brake, and the actuation thereof; AND
figure 4 schematically shows the generation of the braking forces by means of the sheath deformation.

### DETAILED DESCRIPTION OF EMBODIMENTS

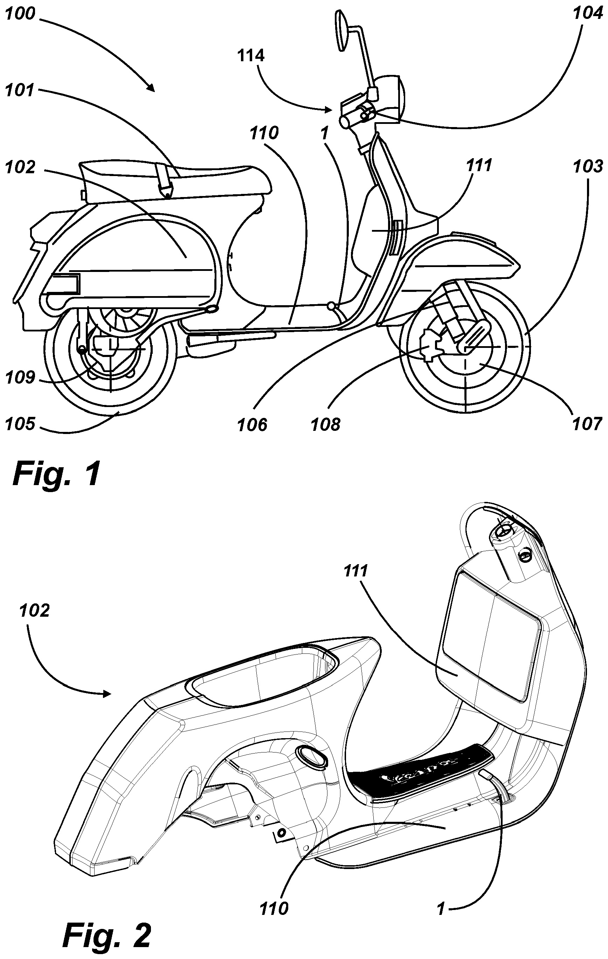

Referring to figures 1 and 2, a motor vehicle, in particular a motor scooter, is indicated as a whole with number 100. The invention relates in general to the field of motorcycles, with particular reference to motor scooters, which have a propulsion unit arranged below a seat 101, inside a chassis 102, here represented laterally, extending from a front steering wheel 103, controlled by means of a handlebar 114, to a drive rear wheel 105. In other embodiments the motor vehicle may include two front steering wheels, rather than a single steering wheel.

The front steering wheel 103 is connected to the suspended mass of the vehicle by means of a shock absorbing suspension 106, associated to the wheel hub, at which a disc front brake 107 is provided, i.e., more in general, a hydraulically controlled brake as defined above, controlled by a specific caliper 108 constituting, in this example, a hydraulic actuator of the front brake 107.

The rear drive wheel 105 comprises a rear brake 109, for example a drum brake, i.e. more in general a mechanical brake or a mechanically actuated brake as defined above, constituted in this embodiment by a drum rotating integrally with the wheel, wherein shoes or jaws are provided, which in the present example constitute a mechanical actuator of the rear brake 109. The shoes (not shown) are made in a friction material, adapted to apply a force on the drum and are actuated through a traction cable 6, one end 62 whereof is connected to the actuator of the mechanical rear brake 109. A spring (not shown in detail) ensures the elastic return of the shoes in an idle position, i.e .in a position where they are clear of the drum and do not provide any braking action.

The hydraulic brake is typically controlled by a manually actuated brake lever 104, usually arranged on the handlebar 114 and connected to a hydraulic actuation system.

Therefore, the manually actuated lever 104 constitutes a first control member of the front brake 107, which allows hydraulic control of the hydraulic actuator 108, i.e. the caliper of the disc brake, typically by opening a pressurized hydraulic circuit, where a pressure propagates, actuating the caliper.

According to the first exemplary embodiment of a combined front-rear braking system described herein, this latter further comprises a second control member of the rear brake 109, which is realized, in the present example, by a pedal 1 arranged at the floorboard 110 that, in the motor vehicle 100, separates the front portion with the handlebar 114 from the rear portion with the seat 101.

Furthermore, the body 102 has a case 111, which is arranged in the front part of the motor vehicle 100, in particular on the face of the front panel facing the driver, and therefore faces towards the floorboard 110, and is accessible through a door and is also provided with a rear part 112, corresponding to said face of the front panel.

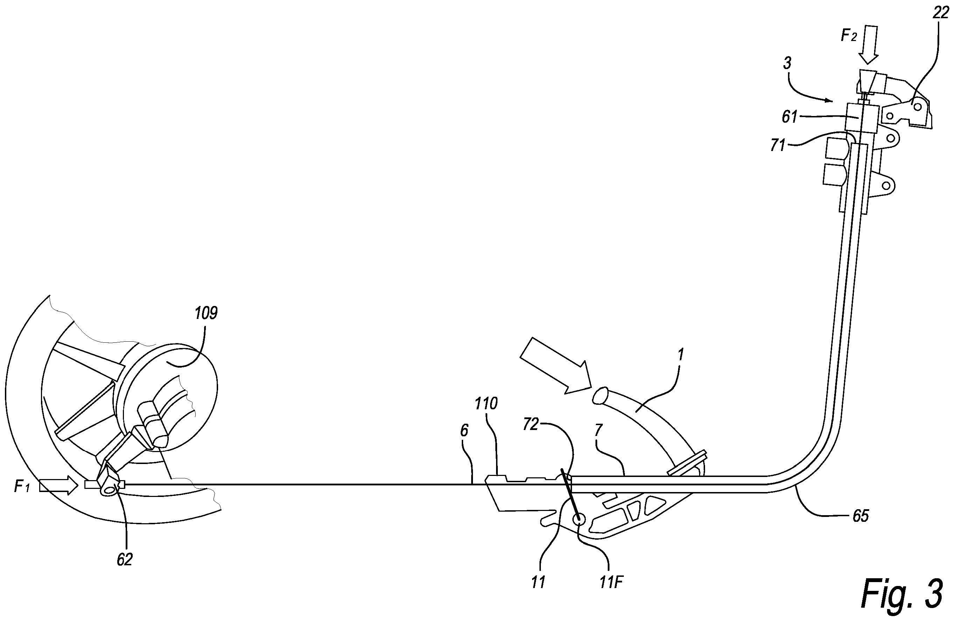

At the bottom 112 of the case 111, or in any other suitable position, the integrated braking system comprises a distribution device 3 (Figure 3) known per se and not described in detail, having a substantially cylindrical hollow body, with a through hole extending according to the longitudinal axis thereof, so as to define, inside it, a hydraulic chamber, and containing a floating piston inside the distribution device 3, adapted to exert a pressure in a transmission fluid contained in said hydraulic chamber.

The distribution device 3 is adapted to transmit a braking force to the front brake 107 when the second control member 1 of the rear brake 109 is actuated, or, in other words, it is configured to induce the actuation of the hydraulic actuator 108 of the front brake 107 following the actuation of the second control member, i.e. the pedal 1 (figure 3), in the manner described later on.

From a more general viewpoint, the distribution device 3 is at the steering column of the motor scooter 100, i.e. in the front part thereof corresponding to the handlebar 114 and to the front wheel 103.

The floating piston (not shown) of the distribution device 3 is controlled by an actuation linkage 22 of the distribution device 3, which is in turn actuated by the transmission cable 6, the end 61 whereof, opposite the end 62 anchored to the mechanical actuator of the rear brake 109, is anchored to the actuation linkage 22 .

The transmission cable 6 is inserted in a sheath 7. Both the cable 6 and the sheath 7 are flexible. Inside the sheath 7, the surfaces of the sheath 7 and of the transmission cable 6 rub together with a given friction, which is a typical feature of the coupling between the transmission cable 6 and the sheath 7.

This friction can be suitably preset during the project step, by knowing the extension of the sheath 7 and the path thereof, in particular the curvature thereof, which determines a greater rubbing between the inner cable 6 and the same sheath 7.

The pedal 1 acts on a lever 11 hinged at 11F (figure 3) on a pivot at the floorboard 110 of the motor vehicle. The lever 11 is connected to or rests on the sheath 7 and causes the movement thereof when the pedal 1 is actuated with a given force transmitted by the pedal 1.

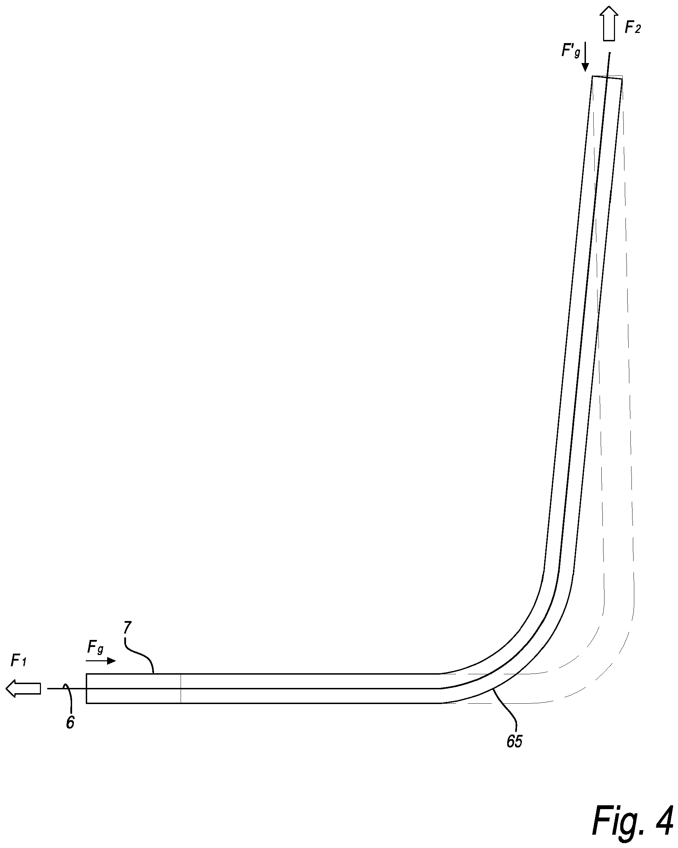

The effect of the pedal 1 on the sheath 7 is substantially illustrated in the diagram of figure 4. The lever 11 actuated b the pedal 1 pushes against the end of the sheath 7 which is abutting against the lever 11. The thrust on the sheath is labeled Fg. The end 71 of the sheath 7, opposite to the point where the force Fg is applied by lever 11, abuts against a point that is stationary with respect to the chassis of the vehicle, at the distribution device 3. Reference Fg' indicates a reaction force applied to the end 71 of the sheath 7. Due to the mutual friction between the sheath 7 and the transmission cable 6, which causes a simultaneous flexural deformation of the sheath 7 and of the transmission cable 6 due to the thrust Fg, the transmission cable 6 is put under tension. At the end 61 of the transmission able 6, anchored to the actuation linkage 22, a traction force F2 is generated, and a corresponding opposite force is applied to the actuation linkage 22. At the end 62, anchored to the actuator of the mechanical rear brake 109, on the transmission cable 6 a traction force F1 is generated, which corresponds to an opposite reaction force causing the actuation of the shoes of the mechanical rear brake.

Therefore, the forces F2 and F1 actuate the front brake by means of the distribution device 3, and the rear brake by means of the mechanical actuator. Therefore, the operating principle of both the front and rear brakes starts by acting directly on the sheath 7 and not on the transmission cable 6.

In the portion extending between the distribution device 3 and the actuation device (pedal 1) of the rear brake 109, the sheath 7 comprises at least a curved portion 65, where the friction between the inner surface of the sheath7 and the transmission cable 6 is generated.

According to the operating principle, by producing on the sheath 7 a force Fg through the control member of the rear brake 109, the sheath is deformed, as shown in dashed lines. Consequently the sheath 7 generates by friction a traction force F2 on the transmission cable 6, which actuates the actuation device, and, at the same time, generates a further force Flopposite to F2 (figures 3 and 4) due to the action and reaction principle, which actuate the rear brake 109.

In other words, the control member 1 generates a thrust directly on the sheath7, causing a change in the curvature thereof at the curved portion 65. This change, due to the action-reaction principle, causes a traction F2 of the transmission cable 6, at the first end 61, causing the actuation of the distribution device 3 and a corresponding traction F1 at the second end 62, causing the actuation of the rear brake 109..

In advantageous embodiments, the braking system is designed such that the action of the transmission cable 6 starts the braking action through the rear brake 109 before acting upon the front brake 107. In this way, in a first portion of the stroke of the pedal 1 the braking force is transmitted only to the rear brake 109, and no force is transmitted to the front brake 107. Said delay can be achieved for instance by means of a resilient member associated to the linkage 22 or by means of the configuration of the floating piston in the distribution device 3.

In a second portion of the stroke of the pedal 1 the braking force is transmitted to both the brakes 109 and 107.

If the driver acts also on the lever 104, the hydraulic circuit of the front brake 107, through the distribution device 3, feeds a larger flow of braking oil to the front brake 107, and consequently increases the braking momentum, until the front wheel is possibly blocked.

Numerous modifications and variants can be applied by a person skilled in the art to the integrated braking system described above without departing from the protective scope of the invention, defined in the attached claims.

## Claims

1. Combined front-rear braking system of a motor vehicle (100), including a hydraulically controlled front brake (107) and a mechanically controlled rear brake (109), comprising:
a first control member (104) of the front brake (107) and a second control member (1) of the rear brake (109), both the control members being movable between a rest position and an operative position;
a hydraulic actuator (108) of the front brake (107), hydraulically controlled through said first control member;
a mechanical actuator of the rear brake (109) controlled through said second control member (1);
a transmission cable (6) connected at a first end (61) for actuating the front brake (107) and at a second end (62) to a mechanical actuator for actuating the rear brake (109), the transmission cable (6) being inserted in a sheath (7), the transmission cable (6) and the sheath (7) having at least a curved portion (65), at which said transmission cable (6) and said sheath (7) rub together,
**characterized in that** said second control member (1) is connected to the sheath (7) so as to apply thereto a force that is transmitted to the ends (61,62) of the transmission cable (6), thus causing the combined actuation of the front brake and of the rear brake (107, 109).

2. The braking system of claim 1, wherein a distribution device (3) is provided for transmitting a braking force to the front brake (107) when the second control member (1) of the rear brake (109) is actuated, the transmission cable (6) being connected, at a second end (62) opposite to the end connected to the mechanical actuator of the rear brake (109), to a linkage, (22) for the actuation of the distribution device (3).

3. The braking system of claim 1, wherein said first control member (104) of the front brake (107) is a manually actuated lever arranged on the handlebar (114) of the motor vehicle (100).

4. The braking system of claim 1, wherein said second control member (1) of the rear brake (1097) is a pedal arranged at the floorboard (110) of the motor vehicle (100).

5. The braking system of claim 4, wherein the pedal (1) acts on a lever (11) hinged on a pivot at the floorboard (110) of the motor vehicle, which is connected to the sheath (7), and causes the movement thereof when it is actuated, acting on it with a given force transmitted by the same pedal (1).

6. A vehicle comprising a rear drive wheel (105), a rear brake (109) for the rear wheel (105), at least one front wheel (103), a front break (107) for the front wheel; and a braking system according to one or more of the preceding claims.

## Patentansprüche

1. Kombiniertes Vorder- und Hinter-Bremssystem für ein Kraftfahrzeug (100) einschließlich einer hydraulisch gesteuerten vorderen Bremse (107) und einer mechanisch gesteuerten hinteren Bremse (109) mit:
einem ersten Steuerelement (104) der vorderen Bremse (107) und einem zweiten Steuerelement (1) der hinteren Bremse (109), wobei beide Steuerelemente zwischen einer Ausgangsposition und einer Betriebsposition bewegbar sind,
einem hydraulischen Betätigungsglied (108) der vorderen Bremse (107), das hydraulisch durch das erste Steuerelement gesteuert wird,
einem mechanischen Betätigungsglied der hinteren Bremse (109), das durch das zweite Steuerelement (1) gesteuert wird,
einem Transmissionskabel (6), das an einem ersten Ende (61) zur Betätigung der vorderen Bremse (107) und an einem zweiten Ende (62) mit einem mechanischen Betätigungsglied zur Betätigung der hinteren Bremse (109) verbunden ist, wobei das Transmissionskabel (6) in einen Mantel (7) eingebracht ist, wobei das Transmissionskabel (6) und der Mantel (7) mindestens einen gekrümmten Bereich (65) aufweisen, in dem das Transmissionskabel (6) und der Mantel (7) aneinander reiben,
**dadurch gekennzeichnet, dass**
das zweite Steuerelement (1) mit dem Mantel (7) verbunden ist, um so eine Kraft daran anzulegen, die an die Enden (61, 62) des Transmissionskabels (6) übertragen wird, wodurch eine kombinierte Betätigung der vorderen Bremse und der hinteren Bremse (107, 109) verursacht wird.

2. Bremssystem nach Anspruch 1, wobei eine Verteilervorrichtung (3) zur Übertragung einer Bremskraft an die vordere Bremse (107) vorgesehen ist, wenn das zweite Steuerelement (1) der hinteren Bremse (109) betätigt wird, wobei das Transmissionskabel (6) an einem zweiten Ende (62) gegenüber dem Ende, das mit dem mechanischen Betätigungsglied für die hintere Bremse (109) verbunden ist, mit einer Verbindung (22) für die Betätigung der Verteilervorrichtung (3) verbunden ist.

3. Bremssystem nach Anspruch 1, wobei das erste Steuerelement (104) der vorderen Bremse (107) ein manuell betätigter Hebel ist, der am Lenker (114) des Kraftfahrzeugs (100) angeordnet ist.

4. Bremssystem nach Anspruch 1, wobei das zweite Steuerelement (1) der hinteren Bremse (1097) ein Pedal ist, das an der Bodenplatte (110) des Kraftfahrzeugs (100) angeordnet ist.

5. Bremssystem nach Anspruch 4, wobei das Pedal (1) auf einen Hebel (11) wirkt, der an einem Schwenkzapfen an der Bodenplatte (110) des Kraftfahrzeugs angelenkt ist, der mit dem Mantel (7) verbunden ist und eine Bewegung davon bewirkt, wenn er betätigt wird, wobei auf ihn mit einer gegebenen Kraft eingewirkt wird, die durch dasselbe Pedal (1) übertragen wird.

6. Fahrzeug mit einem Antriebs-Hinterrad (105), einer hinteren Bremse (109) für das Hinterrad (105), mindestens einem Vorderrad (103), einer vorderen Bremse (107) für das Vorderrad und einem Bremssystem nach einem oder mehreren der vorstehenden Ansprüche.

## Revendications

1. Système de freinage combiné avant-arrière d'une véhicule motorisé (100), incluant un frein avant commandé hydrauliquement (107) et un frein arrière commandé mécaniquement (109), comprenant :
un premier organe de commande (104) du frein avant (107) et un deuxième organe de commande (1) du frein arrière (109), les deux organes de commande étant déplaçables entre une position de repos et une position active ;
un actionneur hydraulique (108) du frein avant (107), commandé hydrauliquement par le premier organe de commande ;
un actionneur mécanique du frein arrière (109) commandé par ledit deuxième organe de commande (1) ;
un câble de transmission (6) connecté à une première extrémité (61) pour actionner le frein avant (107) et au niveau d'une deuxième extrémité (62) à un actionneur mécanique pour actionner le frein arrière (109), le câble de transmission (6) étant inséré dans une gaine (7), le câble de transmission (6) et la gaine (7) ayant au moins une partie incurvée (65) à niveau de laquelle ledit câble de transmission (6) et ladite gaine (7) se frottent l'un à l'autre,
**caractérisé en ce que**
ledit deuxième organe de commande (1) est connecté à la gaine (7) de manière à appliquer à celle-ci une force qui est transmise aux extrémités (61, 62) du câble de transmission (6), provoquant ainsi l'actionnement combiné du frein avant et du frein arrière (107, 109).

2. Le système de freinage selon la revendication 1, dans lequel un dispositif de distribution (3) est prévu pour transmettre une force de freinage au frein avant (107) lorsque le deuxième organe de commande (1) du frein arrière (109) est actionné, le câble de transmission (6) étant connecté, au niveau d'une deuxième extrémité (62) opposée à l'extrémité connectée à l'actionneur mécanique du frein arrière (109), à une liaison (22) pour l'actionnement du dispositif de distribution (3).

3. Le système de freinage selon la revendication 1, dans lequel ledit premier organe de commande (104) du frein avant (107) est un levier actionné manuellement agencé sur le guidon (114) du véhicule motorisé (100).

4. Le système de freinage selon la revendication 1, dans lequel ledit deuxième organe de commande (1) du frein arrière (109) est une pédale agencée au niveau du plancher (110) du véhicule motorisé (100).

5. Le système de freinage selon la revendication 4, dans lequel la pédale (1) agit sur un levier (11) articulé sur un pivot au niveau du plancher (110) du véhicule motorisé qui est connecté à la gaine (7) et provoque le mouvement de celle-ci lorsqu'il est actionné, agissant sur elle avec un force donnée transmise par ladite pédale (1).

6. Un véhicule comprenant une roue d'entraînement arrière (105), un frein arrière (109) pour la roue arrière (105), au moins une roue avant (103), un frein avant (107) pour la roue avant ; et un système de freinage selon l'une ou plusieurs des revendications précédentes.
